# EUROPEAN PATENT APPLICATION

(11) **EP 1 967 931 A2**
(43) Date of publication of application: **10.09.2008**
(21) Application number: 08003823.5
(22) Date of filing: 29.02.2008
(51) Int. Cl.: G05D 1/00

(54) **Vehicle**

(30) Priority: 06.03.2007 JP 2007056349
(71) Applicant: Yamaha Hatsudoki Kabushiki Kaisha, Iwata-shi, Shizuoka-ken (JP)
(72) Inventor: Kamiya, Tsuyoshi, Iwata-shi Shizuoka-ken (JP)
(74) Representative: Grünecker, Kinkeldey, Stockmair & Schwanhäusser Anwaltssozietät

(57) **Abstract**

A vehicle includes a button switch and a remote controller for setting an autonomous or manual driving mode, a microcomputer which outputs a mask control signal that corresponds to the driving mode, a command control unit which inputs a command to the microcomputer to output the mask control signal that corresponds to the driving mode, and a forward obstacle sensor and a rearward obstacle sensor which detect an obstacle and output a detection signal. A first logic circuit generates an emergency stop control signal that indicates a need or no need for an emergency stop of the vehicle based on the mask control signal from the microcomputer and the detection signals from the obstacle sensors. An emergency stopping operation of the vehicle is controlled based on the emergency stop control signal from the first logic circuit.

## Description

### BACKGROUND OF THE INVENTION

### 1. Field of the Invention

The present invention relates to a vehicle, and more specifically to a vehicle capable of both autonomous driving in which the vehicle runs under self-control and manual driving in which the vehicle runs under a human operator's control.

### 2. Description of the Related Art

Conventionally, a number of proposals have been made for a vehicle which is capable of autonomous driving and manual driving. In JP-A 2006-48614 for example, the inventor et al. of the present invention disclosed a vehicle for autonomous driving which is capable of detecting via an obstacle sensor an obstacle located some distance away from the vehicle along a driving path of the vehicle, actuating a solenoid brake, and disabling an ignition unit. According to the technique in JP-A 2006-48614, it is possible to bring the vehicle to an emergency stop before the vehicle makes contact with the obstacle on the driving path during autonomous driving.

Such an emergency stop control is achieved by a microcomputer in a control unit which outputs a signal for disabling the ignition unit and actuating the solenoid brake based on a detection signal from the obstacle sensor.

However, the technique disclosed in JP-A 2006-48614 is not of a type where output from the obstacle sensor is received/blocked on the basis of the mode of driving.

One solution can be that the output from the obstacle sensor is inputted to the ignition unit and the solenoid brake so that the ignition unit and the solenoid brake are controlled directly based on the detection signal from the obstacle sensor. However, this poses a problem of inconvenience since the vehicle will be in the disabled state until the obstacle has been removed.

### SUMMARY OF THE INVENTION

In order to overcome the problems described above, preferred embodiments of the present invention provide a reliable and convenient vehicle.

According to a preferred embodiment of the present invention, there is provided a vehicle capable of autonomous driving under self-control and manual driving under a human operator's control. The vehicle includes an operation unit arranged to set an autonomous/manual driving mode; a first controller arranged to output a mask control signal which corresponds to the driving mode set by the operation unit; a detector arranged to detect an obstacle and output a detection signal; and a logic circuit arranged to generate an emergency stop control signal which indicates a need or no need for an emergency stop of the vehicle based on the mask control signal from the first controller and the detection signal from the detector. An emergency stop operation of the vehicle is controlled based on the emergency stop control signal from the logic circuit.

According to a preferred embodiment of the present invention, when the driving mode is set to the autonomous driving mode by the operation unit, a mask control signal which disables masking of detection signals is inputted from the first controller to the logic circuit. Then, the logic circuit outputs the detection signal from the detector without masking the detection signal, i.e., virtually unchanged, as the emergency stop control signal. By generating the emergency stop control signal virtually directly from the detection signal with a hardware logic circuit, it is possible to generate an emergency stop control signal which corresponds more truly to the detection signal than in a case where the emergency stop control signal is generated by software. In other words, it becomes more reliable that an emergency stop control signal which indicates a need for an emergency stop is outputted when the detector has detected an obstacle, and that an emergency stop control signal which indicates no need for an emergency stop is outputted otherwise. Therefore, it is now possible to bring the vehicle to an emergency stop more reliably upon detection of an obstacle in the autonomous driving mode, and therefore to improve reliability. When the driving mode is set to the manual driving mode by the operation unit, the first controller inputs to the logic circuit a mask control signal which enables the masking of the detection signals. Then, the logic circuit outputs an emergency stop control signal which is made by masking the detection signals. Therefore, even if the detector has detected an obstacle under the manual driving mode, it is now possible to output an emergency stop control signal which indicates no need for an emergency stop from the logic circuit. Therefore, it is possible to drive the vehicle even if the detector has detected an obstacle in the manual driving mode, and this makes it possible to improve convenience.

Preferably, the vehicle further includes a second controller arranged to input a command to the first controller for outputting the mask control signal which corresponds to the driving mode. With this arrangement, the mask control signal from the first controller is also inputted to the second controller, and the second controller determines whether or not the mask control signal corresponds to the driving mode. In this case, it is possible to monitor the first controller by using the second controller, making it possible to further improve reliability.

Preferably, the second controller supplies the first controller with an autonomous driving start command under the autonomous driving mode if there is an input of the mask control signal for disabling masking of the detection signals from the first controller. According to such an arrangement, the logic circuit outputs an emergency stop control signal which indicates a need for an emergency stop when there is an obstacle in the driving path. Therefore, autonomous driving is not started and contact with the obstacle is prevented.

It should be noted here that "mask control signal" is a signal which determines whether or not to cause the logic circuit to generate an emergency stop control signal which corresponds to the detection signal from the detector, i.e., the mask control signal is a signal which disables or enables the masking of the detection signals.

Also, "emergency stop" means to forcibly bring a vehicle into an undrivable state.

Other features, elements, processes, steps, characteristics and advantages of the present invention will become more apparent from the following detailed description of preferred embodiments of the present invention with reference to the attached drawings.

### BRIEF DESCRIPTION OF THE DRAWINGS

Fig. 1 is a perspective view of a vehicle according to a preferred embodiment of the present invention.

Fig. 2 is a left side view of the vehicle according to the preferred embodiment of the present invention shown in Fig. 1.

Fig. 3 is a block diagram showing an electrical configuration of the vehicle in Fig. 1 and Fig. 2.

Fig. 4 is a flowchart showing an example of the operation of a command control unit in a manual driving mode.

Fig. 5 is a flowchart showing an example of the operation of a drive control unit in the manual driving mode.

Fig. 6 is a flowchart showing an example of the operation of the command control unit in an autonomous driving mode.

Fig. 7 is a flowchart showing an example of the operation of the drive control unit in the autonomous driving mode.

Fig. 8 is a time chart showing an example of changes in the driving mode, various signals, and various commands of the vehicle in Fig. 1 and Fig. 2.

Fig. 9 is a time chart showing another example of changes in the driving mode, various signals, and various commands of the vehicle in Fig. 1 and Fig. 2.

### DETAILED DESCRIPTION OF PREFERRED EMBODIMENTS

Hereinafter, preferred embodiments of the present invention will be described with reference to the drawings.

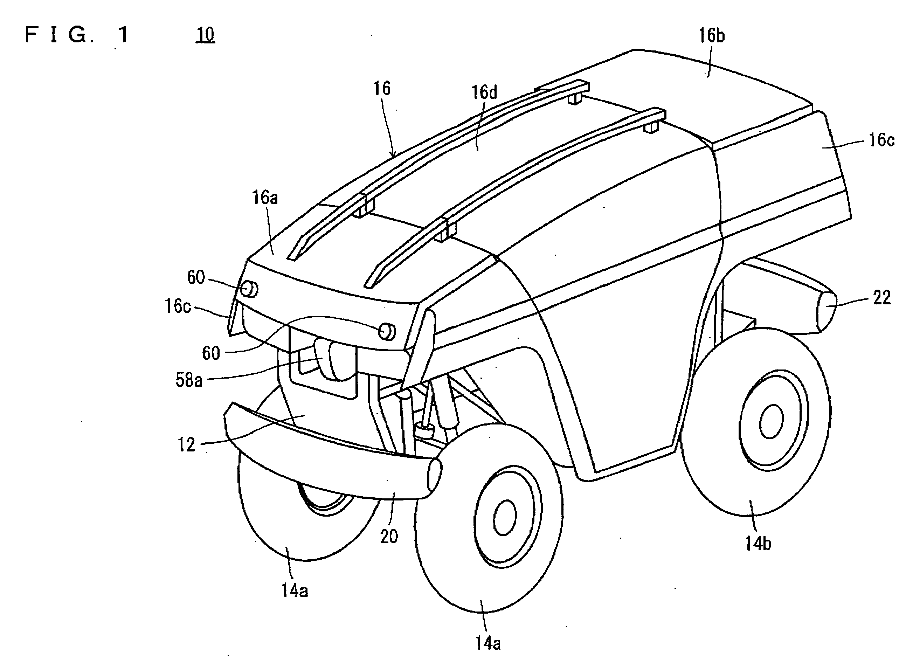

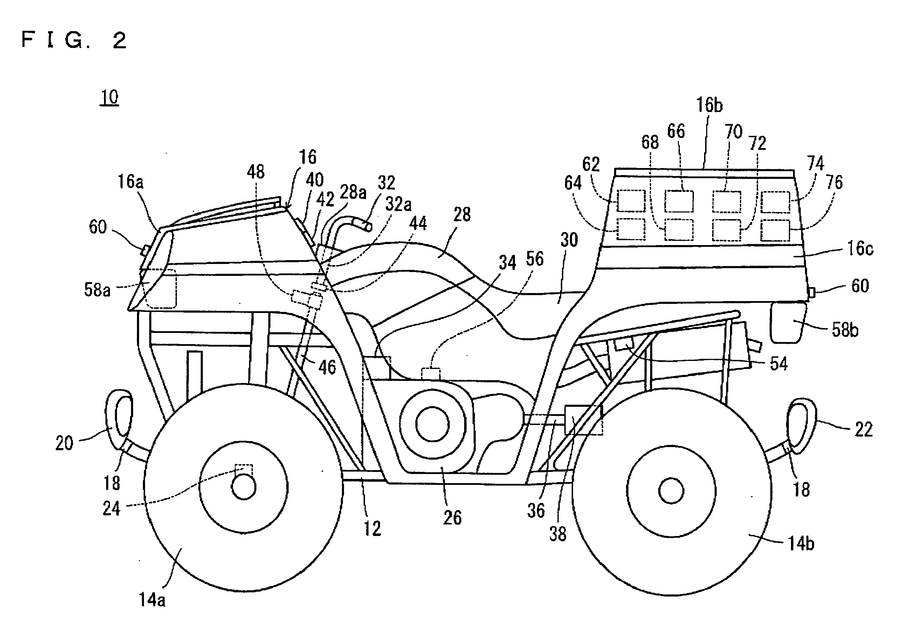

Referring to Fig. 1 and Fig. 2, a vehicle 10 according to the present preferred embodiment of the present invention preferably is a four-wheeled buggy for driving on a rough terrain, for example, and that is capable of autonomous driving (auto drive) under self-control or manual driving (manual drive) under a human operator's control, for such tasks as farming and surveying. However, the present invention is not limited to such a vehicle and can be applied to any type of vehicle.

Note here, that the terms right and left, front and rear, as well as up and down as used in the preferred embodiments of the present invention refer to the right and left, front and rear, and up and down respectively, based on a state where a human operator sits on a seat 30 of the vehicle 10, facing toward a vehicle's steering handle 32.

The vehicle 10 includes a body frame 12 extending in the front to rear direction, front wheels 14a which are provided on the right side and the left side so as to sandwich a front end portion of the body frame 12, rear wheels 14b which are provided on the right side and the left side so as to sandwich a rear end portion of the body frame 12, and a body cover 16 which covers the body frame 12 almost entirely.

It should be noted here that Fig. 1 and Fig. 2 show only the left rear wheel of a pair of rear wheels 14b. Also, Fig. 2 shows a state where a center cover 16d (to be described later) as a portion of the body cover 16 is removed.

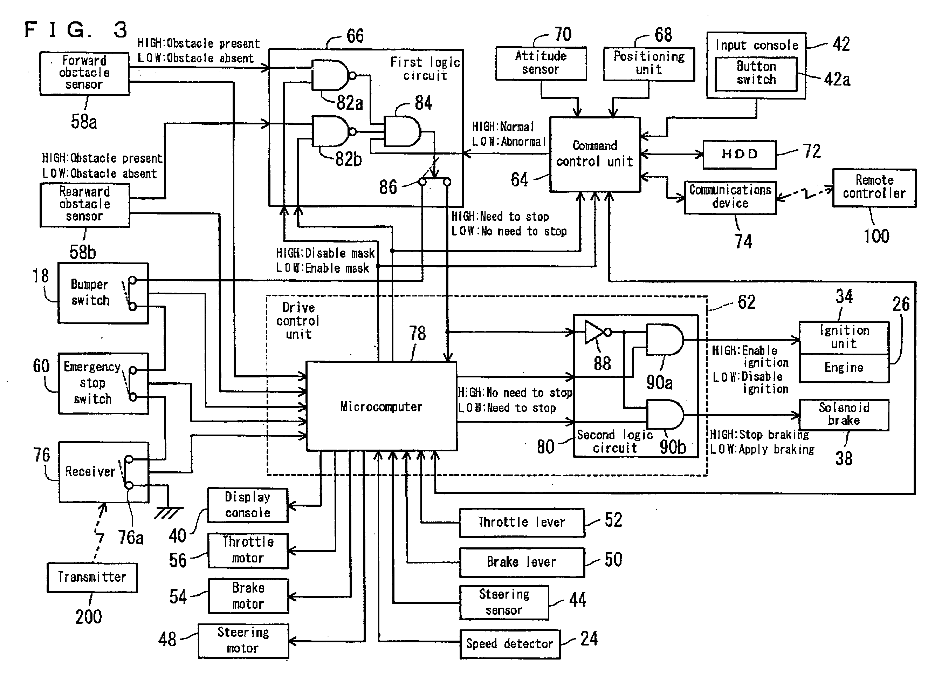

As shown in Fig. 2, a front bumper 20 is mounted on a front end portion of the body frame 12 via a bumper switch 18. Likewise, a rear bumper 22 is mounted on a rear end portion of the body frame 12 via a bumper switch 18. The bumper switch 18 provided between the body frame 12 and the front bumper 20 is switched from a closed state (shown in a solid line in Fig. 3) to an open state (shown in a dashed line in Fig. 3) when an obstacle makes contact with the front bumper 20. The bumper switch 18 provided between the body frame 12 and the rear bumper 22 operates in a similar way. Each bumper switch 18 outputs an emergency stop control signal which indicates a need or no need for an emergency stop of the vehicle 10. The switches' open/close action changes the state of the emergency stop control signal from one form to another. Specifically, each bumper switch 18 outputs a HIGH signal in the open state which indicates a need for an emergency stop of the vehicle 10 whereas the switch 18 outputs a LOW signal in the closed state which indicates no need for an emergency stop of the vehicle 10. The left front wheel 14a has an axle provided with a speed detector 24 which detects the speed of rotation of the axle, i.e., the speed of the vehicle 10.

As shown in Fig. 1, the body cover 16 includes a front cover 16a, a rear cover 16b, side covers 16c, and the center cover 16d. The front cover 16a is provided above the right and the left front wheels 14a while the rear cover 16b is provided above the right and the left rear wheels 14b. The side covers 16c are provided on the right and the left sides of the vehicle, so as to cover the sides of the front cover 16a and the rear cover 16b. The center cover 16d is substantially flush with the front cover 16a, the rear cover 16b, and the right and the left side covers 16c, and is detachable from the front cover 16a and the rear cover 16b.

As shown in Fig. 2, removing the center cover 16d exposes an engine 26 installed at a center region of the body frame 12, a fuel tank 28 and a seat 30 provided above the engine 26, and a steering handle 32 provided at a front end portion of the fuel tank 28.

The engine 26 is provided with an ignition unit 34 which includes an ignition coil, an ignition plug, etc. The engine 26 generates driving power by burning fuel from the fuel tank 28 with a spark provided from the ignition unit 34. The engine 26 has a transmission to which a drive shaft 36 is connected in order to transmit the power to the rear wheels 14b. The drive shaft 36 is provided with a solenoid brake (parking brake) 38 which brakes the drive shaft 36.

At a location ahead of the fuel tank 28 and behind the front cover 16a, a display console 40 and an input console 42 are provided. The display console 40 is defined by a liquid crystal display, etc. for displaying various kinds of information regarding the state of driving, for example. The input console 42 is for a human operator to input various commands and various kinds of information, and includes a button switch 42a (see Fig. 3) for switching from one mode to another between a manual driving mode and an autonomous driving mode.

The steering handle 32 is rotatable on a steering handle shaft 32a which is inserted through a steering handle support 28a of the fuel tank 28. The steering handle shaft 32a has a lower end provided with a steering sensor 44 which detects a turning angle (an amount of steering) of the steering handle 32. Below the steering handle shaft 32a, there is a steering shaft 46. The steering shaft 46 is connected with a steering mechanism for turning the right and the left front wheels 14a in various directions. On an upper end of the steering shaft 46, a steering motor 48 is provided. As the steering motor 48 is driven, the steering shaft 46 is rotated to actuate the steering mechanism, causing the right and the left front wheels 14a to turn right or left, enabling the vehicle 10 to turn right or left.

Further, the steering handle 32 is provided with an operation unit such as a brake lever 50 and a throttle lever 52 (see Fig. 3). As the brake lever 50 is actuated, a brake motor 54 which is provided behind and above the solenoid brake 38 is driven, and as the brake motor 54 is driven, a disc brake which is provided on each of the right and the left front wheels 14a and the right and the left rear wheels 14b is actuated. Likewise, as the throttle lever 52 is moved, a throttle motor 56 is driven, and as the throttle motor 56 is driven, a carburetor is actuated to adjust the amount of fuel supplied from the fuel tank 28 to the engine 26, or in effect to adjust the output from the engine 26.

At a location below the front cover 16a and between the right and the left side covers 16c, a forward obstacle sensor 58a is provided. The forward obstacle sensor 58a preferably includes a laser scanner, etc., and detects an obstacle ahead of the vehicle. When an obstacle ahead of the vehicle has been detected, the forward obstacle sensor 58a outputs a HIGH signal (detection signal indicating a presence of an obstacle), otherwise the forward obstacle sensor 58a outputs a LOW signal (detection signal indicating an absence of an obstacle). Likewise, a rearward obstacle sensor 58b is provided below the rear cover 16b, which outputs a HIGH signal upon detection of an obstacle behind the vehicle while outputting a LOW signal otherwise.

As shown in Fig. 1 and Fig. 2, emergency stop switches 60 are provided on the right and the left sides on the front surface of the front cover 16a. Likewise, emergency stop switches 60 are provided on rear surfaces of the right and the left side covers 16c. Each emergency stop switch 60 is switched from a closed state (indicated by a solid line in Fig. 3) to an open state (indicated by a dashed line in Fig. 3) by being pushed manually (e.g., when making physical contact with an object). Like the bumper switches 18, each emergency stop switch 60 outputs an emergency stop control signal which indicates a need or no need for an emergency stop of the vehicle 10. Specifically, each emergency stop switch 60 outputs a HIGH signal which indicates a need for an emergency stop of the vehicle 10 in the open state, whereas it outputs a LOW signal which indicates no need for an emergency stop of the vehicle 10 in the closed state.

It should be noted here that Fig. 2 shows only one emergency stop switch 60 provided on the left side cover 16c, although the emergency stop switches 60 are provided on the right and the left side covers 16c.

Referring also to Fig. 3, inside the rear cover 16b, there are provided a drive control unit 62 arranged to control the drive of the vehicle 10; a command control unit 64 which provides various commands to the drive control unit 62; a first logic circuit 66 which generates an emergency stop control signal based on detection signals supplied by the forward obstacle sensor 58a and the rearward obstacle sensor 58b; a positioning unit 68 which detects a position of the vehicle 10 by receiving signals from GPS (Global Positioning System) satellites; an attitude sensor 70 which detects an inclination of the vehicle 10; a hard disc drive (HDD: including a hard disc) 72 which stores map data, various programs, etc.; a communications device 74 for wireless communication with a remote controller (hereinafter, abbreviated as RC) 100; and a receiver 76 which receives signals from a transmitter 200 and activates a switch 76a.

Next, description will be made of an electric configuration of the vehicle 10 with reference to Fig. 3.

It should be noted here that although the vehicle 10 is preferably provided with two bumper switches 18 and four emergency stop switches 60, Fig. 3 shows only one bumper switch 18 and one emergency stop switch 60 for easier understanding.

The drive control unit 62 includes a microcomputer 78 which preferably includes a CPU, a ROM, a RAM, etc., and a second logic circuit 80 which generates a control signal based on the emergency stop control signal from the first logic circuit 66, and is arranged to control operation of the ignition unit 34 and the solenoid brake 38.

The microcomputer 78 is supplied with information regarding the speed of the vehicle 10 from the speed detector 24. The microcomputer 78 inputs this information, as well as other information which should be notified to the operator, to the display console 40 for display on the display console 40.

The microcomputer 78 is also supplied, from the steering sensor 44, with information regarding the angular rotation of the steering handle 32 (see Fig. 2). Based on the information from the steering sensor 44, the microcomputer 78 inputs a signal to the steering motor 48, whereby the steering motor 48 is driven to turn the right and the left front wheels 14a to the right or the left.

Further, the microcomputer 78 is also supplied with an operation signal from the brake lever 50. Based on the operation signal from the brake lever 50, the microcomputer 78 inputs a signal to the brake motor 54, whereby the brake motor 54 is driven to actuate the disc brakes to apply braking on the pair of front wheels 14a and the pair of rear wheels 14b.

Further, the microcomputer 78 is supplied with an operation signal from the throttle lever 52. Based on the operation signal from the throttle lever 52, the microcomputer 78 inputs a signal to the throttle motor 56, whereby the throttle motor 56 is driven to control the amount of fuel supplied to the engine 26, or in essence, the output from the engine 26.

Further, the microcomputer 78 is supplied with various commands from the command control unit 64. The microcomputer 78 drives the steering motor 48, the brake motor 54, the throttle motor 56, etc., also in response to the commands from the command control unit 64 to control driving of the vehicle 10. Further, based on the commands supplied from the command control unit 64, the microcomputer 78 inputs a mask control signal to the first logic circuit 66. On the other hand, the microcomputer 78 supplies the command control unit 64 with information regarding the speed of the vehicle 10, information regarding the driving status of the motors and the engine, the mask control signal, etc.

The command control unit 64 is preferably a computer which includes a CPU, a ROM, a RAM, etc.

The command control unit 64 receives commands from a human operator via the input console 42; information regarding the current position of the vehicle 10 from the positioning unit 68; information regarding the inclination of vehicle 10 from the attitude sensor 70; map data and various programs, etc. from the HDD 72; and operation signals, etc. from the RC 100 via the communications device 74. on the other hand, the command control unit 64 supplies the HDD 72 and the communications device 74 with various kinds of information. The information inputted from the command control unit 64 to the HDD 72 is stored on the hard disc of the HDD 72, whereas the information inputted to the communications device 74 is transmitted from the communications device 74 to the RC 100 on a radio link. The RC 100 preferably includes a personal computer and an operation unit such as a steering handle connected with the personal computer. Through operations input to the RC 100, the operator gives manual driving commands to the command control unit 64. On the RC 100, the operator can choose the autonomous/manual driving mode. The RC 100 has a monitor screen which displays information regarding the driving status of the vehicle 10 and other information from the command control unit 64.

The first logic circuit 66 includes NAND circuits 82a, B2b, an AND circuit 84, and a switch 86. To the NAND circuit 82a, the forward obstacle sensor 58a supplies a HIGH signal (detection signal indicating a presence of an obstacle) or a LOW signal (detection signal indicating an absence of an obstacle). The NAND circuit 82a also receives information from the microcomputer 78, i.e., a HIGH signal (mask control signal which disables masking the detection signals) or a LOW signal (mask control signal which enables the masking of the detection signals). If the input from the forward obstacle sensor 58a and the input from the microcomputer 78 are both HIGH signals, the NAND circuit 82a inputs a LOW signal to the AND circuit 84. Otherwise, the NAND circuit 82a inputs a HIGH signal to the AND circuit 84. The NAND circuit 82b operates in a similar way as the NAND circuit 82a but based on a detection signal from the rearward obstacle sensor 58b and the mask control signal from the microcomputer 78, and inputs a HIGH signal or a LOW signal to the AND circuit 84.

The AND circuit 84 is supplied with a HIGH signal or a LOW signal from each of the NAND circuits 82a, 82b as well as from the command control unit 64. If there is any abnormality in the driving status, etc. of the vehicle 10, the command control unit 64 inputs a LOW signal to the AND circuit 84. Otherwise, the command control unit 64 inputs a HIGH signal to the AND circuit 84. If any of the inputs from the NAND circuits 82a, 82b and the command control unit 64 are HIGH signals, the AND circuit 84 inputs a HIGH signal to the switch 86. Otherwise, the AND circuit 84 inputs a LOW signal to the switch 86.

The switch 86 assumes a closed state (indicated by a solid line) upon input of a HIGH signal from the AND circuit 84, whereas it assumes an open state (indicated by a dashed line) upon input of a LOW signal from the AND circuit 84. Like the bumper switches 18 and the emergency stop switches 60, the switch 86 outputs an emergency stop control signal which indicates a need or no need for an emergency stop of the vehicle 10. Specifically, in the open state, the switch 86 outputs a HIGH signal which indicates a need for an emergency stop of the vehicle 10, whereas in the closed state, it outputs a LOW signal which indicates no need for an emergency stop of the vehicle 10. The emergency stop control signal outputted from the switch 86 is inputted to the microcomputer 78 and the second logic circuit 80.

The first logic circuit 66 as has been described above operates as follows when there is an input of a HIGH signal from the command control unit 64.

If the microcomputer 78 outputs a HIGH signal as the mask control signal and at least one of the forward obstacle sensor 58a and the rearward obstacle sensor 58b outputs a HIGH signal as the detection signal, the first logic circuit 66 outputs, as the emergency stop control signal, a HIGH signal (emergency stop control signal which indicates a need for an emergency stop). If the microcomputer 78 outputs a HIGH signal and both of the forward obstacle sensor 58a and the rearward obstacle sensor 58b output a LOW signal, the first logic circuit 66 outputs, as the emergency stop control signal, a LOW signal (emergency stop control signal which indicates no need for an emergency stop). In other words, if the input from the microcomputer 78 is a HIGH signal (mask control signal which disables the masking of the detection signals), the first logic circuit 66 does not mask detection signals from the obstacle sensors that detect an obstacle, and outputs the signal as it is or virtually as unchanged, as the emergency stop control signal. On the other hand, if the input from the microcomputer 78 is a LOW signal, the first logic circuit 66 outputs a LOW signal as the emergency stop control signal regardless of whether the outputs from the forward obstacle sensor 58a and the rearward obstacle sensor 58b are HIGH or LOW. In other words, if the input from the microcomputer 78 is a LOW signal (the mask control signal which enables the masking of the detection signals), the first logic circuit 66 masks the detection signals from the forward obstacle sensor 58a and the rearward obstacle sensor 58b, and always outputs a LOW signal as the emergency stop control signal. As described, the mask control signal from the microcomputer 78 determines whether the first logic circuit 66 will generate an emergency stop control signal corresponding to the detection signal.

The second logic circuit 80 includes a NOT circuit 88 and AND circuits 90a, 90b. The NOT circuit 88 receives information from the first logic circuit 66, i.e., a HIGH signal (emergency stop control signal which indicates a need for an emergency stop) or a LOW signal (emergency stop control signal which indicates no need for an emergency stop). If the input is a HIGH signal, the NOT circuit 88 outputs a LOW signal to the AND circuits 90a, 90b whereas if the input is a LOW signal, it outputs a HIGH signal to the AND circuits 90a, 90b.

The AND circuit 90a receives a HIGH signal or a LOW signal from each of the NOT circuit 88 and the microcomputer 78. If the input from the microcomputer 78 and the input from the NOT circuit 88 are HIGH, the AND circuit 90a inputs a HIGH signal as a control signal to the ignition unit 34. Otherwise, the AND circuit 90a inputs a LOW signal to the ignition unit 34 as the control signal. With an input of the HIGH signal, the ignition unit 34 ignites fuel which is supplied to the engine 26 thereby allowing the engine 26 to generate power. However, an input of the LOW signal disables the ignition unit 34 and stops the engine 26.

Similarly to the AND circuit 90a, the AND circuit 90b receives a HIGH signal or a LOW signal from each of the NOT circuit 88 and the microcomputer 78. If the input from the microcomputer 78 and the input from the NOT circuit 88 are HIGH, the AND circuit 90b inputs a HIGH signal as a control signal to the solenoid brake 38. Otherwise, the AND circuit 90b inputs a LOW signal to the solenoid brake 38 as the control signal. Under an input of the HIGH signal, the solenoid brake 38 does not apply braking on the drive shaft 36 whereas it applies braking on the drive shaft 36 under an input of the LOW signal.

When the vehicle 10 is in operation, the microcomputer 78 inputs a HIGH signal to the AND circuit 90a, 90b if there is no emergency stop command issued from a human operator. Under this state, if there is an input of a LOW signal from the first logic circuit 66 to the NOT circuit 88, the second logic circuit 80 allows the ignition unit 34 to maintain ignition and allows the solenoid brake 38 to maintain its inactivated state. On the other hand, if the input from the first logic circuit 66 to the NOT circuit 88 is a HIGH signal, the second logic circuit 80 disables the ignition unit 34, and activates the solenoid brake 38 to apply braking on the drive shaft 36, stopping the engine 26, stopping the right and the left rear wheels 14b, thereby bringing the vehicle 10 to an emergency stop. As described, the second logic circuit 80 controls operation of a driving/braking device which includes the ignition unit 34 and the solenoid brake 38 based on the emergency stop control signal from the first logic circuit 66, thereby controlling emergency stopping operation of the vehicle 10.

Note that the bumper switches 18, the emergency stop switches 60, the switch 76a in the receiver 76, and the switch 86 in the first logic circuit 66 are connected in series. The switch 76a in the receiver 76 is switched from a closed state (indicated by a solid line) to an open state (indicated by a dashed line) upon reception of an emergency stop signal sent wirelessly from the transmitter 200. The switch 76a outputs an emergency stop control signal which indicates a need or no need for an emergency stop of the vehicle 10 similarly to the bumper switches 18, the emergency stop switches 60, and the switch 86. Specifically, in the open state, the switch 76a outputs a HIGH signal which indicates a need for an emergency stop of the vehicle 10 whereas in the closed state it outputs a LOW signal which indicates no need for an emergency stop of the vehicle 10. Since all of the switches are connected in series, any one of the switches which becomes an open state will cause an input of a HIGH signal to the microcomputer 78 and the second logic circuit 80. In other words, the vehicle 10 is brought to an emergency stop if any one of the switches becomes an open state.

Further, the microcomputer 78 is supplied with determination signals. Specifically, if the forward obstacle sensor 58a outputs a HIGH signal, the forward obstacle sensor 58a inputs a first determination signal to the microcomputer 78; if the rearward obstacle sensor 58b outputs a HIGH signal, the rearward obstacle sensor 58b inputs a second determination signal; if the bumper switch 18 outputs a HIGH signal, the bumper switch 18 inputs a third determination signal; if the emergency stop switch 60 outputs a HIGH signal, the emergency stop switch 60 inputs a fourth determination signal; and if the switch 76a in the receiver 76 outputs a HIGH signal, the receiver 76 inputs a fifth determination signal. With the input of determination signals to the microcomputer 78 as described, the microcomputer 78 can determine which of the switches has outputted the HIGH signal and why the vehicle 10 has been brought to an emergency stop.

It should be noted here that when the vehicle 10 is in operation, a human operator can issue an emergency stop command, upon which the microcomputer 78 inputs a LOW signal to the AND circuits 90a, 90b. In this case again, the second logic circuit 80 disables the ignition unit 34 and activates the solenoid brake 38 to apply braking on the drive shaft 36, bringing the vehicle 10 to an emergency stop.

In the present preferred embodiment, the microcomputer 78 defines a first controller. The forward obstacle sensor 58a and the rearward obstacle sensor 58b define detectors. The command control unit 64 defines a second controller. The button switch 42a in the input console 42 and the RC 100 function as an operation unit arranged to set a driving mode.

The vehicle 10 as described above performs autonomous driving (auto drive) on a predetermined driving path in an autonomous driving mode when the command control unit 64 supplies commands to the microcomputer 78 based on position information obtained from the positioning unit 68 and map data which is stored in the HDD 72 in advance. Also, the vehicle 10 performs manual driving (manual drive) on a driving path in a manual driving mode when a human operator on the vehicle 10 operates the operation unit (operation device) thereby supplying commands to the microcomputer 78. The manual driving may be performed without an operator riding on the vehicle 10 by using the RC 100 thereby supplying commands to the command control unit 64, and eventually to the microcomputer 78.

It should be noted here that "the autonomous driving mode" is a state where autonomous driving is enabled. It is thus defined that even when the vehicle is not actually in motion, the vehicle is in the autonomous driving mode as long as it is set to the autonomous driving mode. Likewise, "the manual driving mode" is a state where manual driving is enabled. It is thus defined that even when the vehicle is not actually in motion, the vehicle is in the manual driving mode as long as it is set to the manual driving mode.

Next, description will be made of a primary operation of the vehicle 10, with reference to Fig. 3 through Fig. 7.

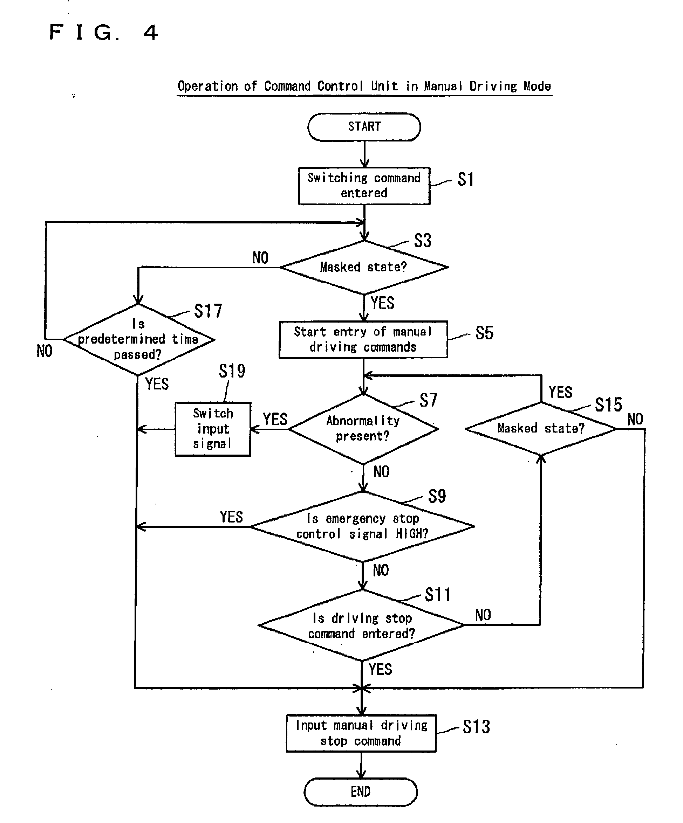

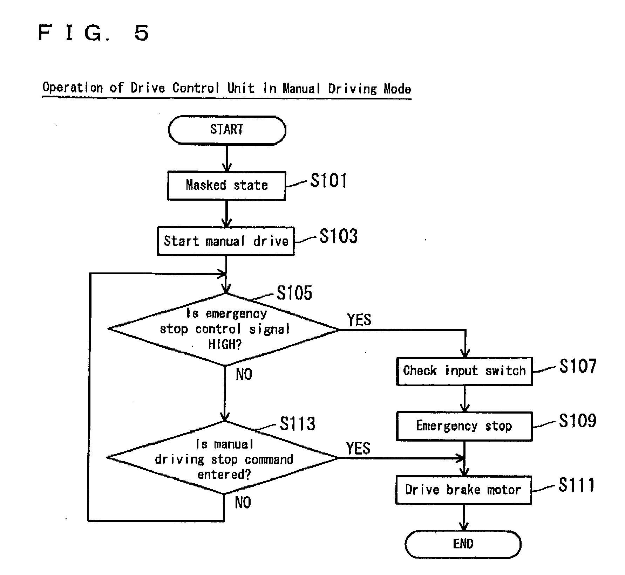

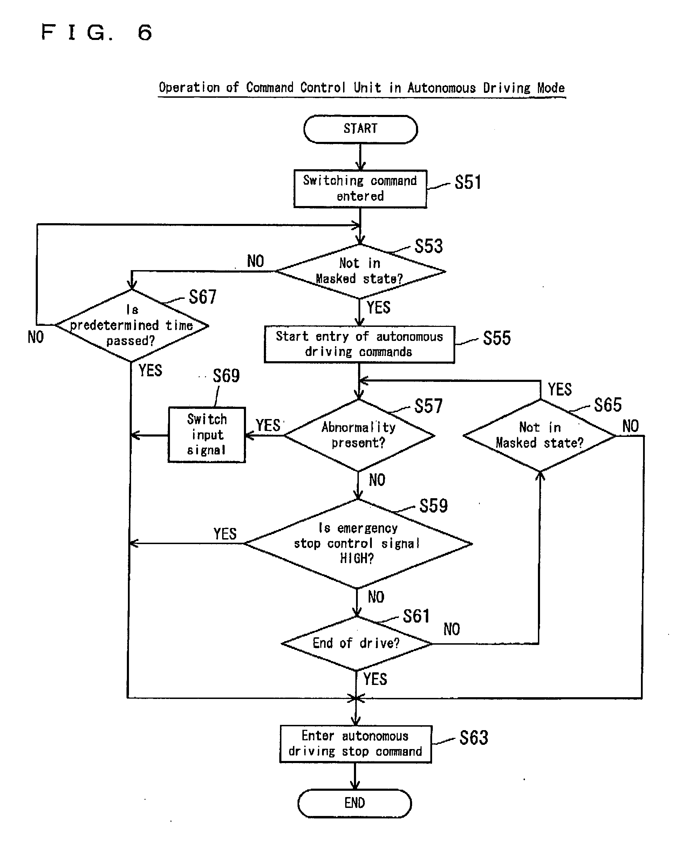

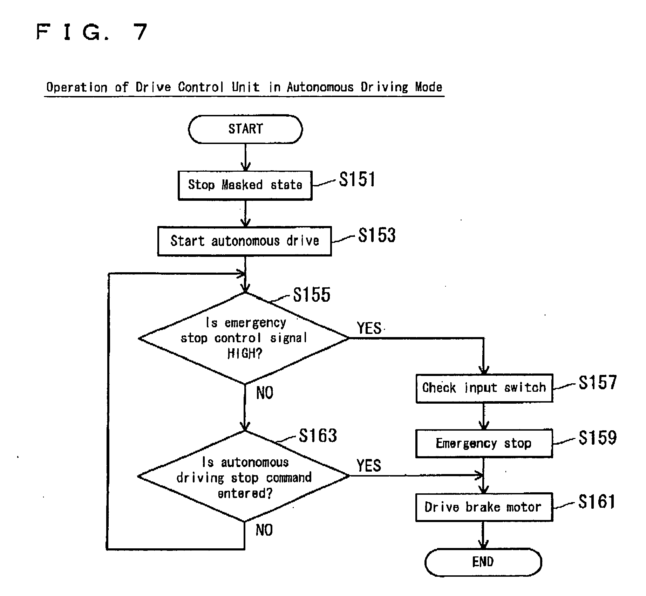

Fig. 4 shows an operation of the command control unit 64 in the manual driving mode, Fig. 5 shows an operation of the drive control unit 62 in the manual driving mode, Fig. 6 shows an operation of the command control unit 64 in the autonomous driving mode, and Fig. 7 shows an operation of the drive control unit 62 in the autonomous driving mode.

First, reference will be made to Fig. 3 and Fig. 4, to describe the operation of the command control unit 64 in the manual driving mode.

Here, assume that the first logic circuit 66 is supplied with a HIGH signal (detection signal indicating presence of an obstacle) from the forward obstacle sensor 58a and a HIGH signal (mask control signal which disables the masking of the detection signals) from the microcomputer 78, and then a switch has been made from the autonomous driving mode to the manual driving mode. In other words, this simulates a situation where the vehicle was brought to an emergency stop due to an obstacle detected ahead, and then switching has been made from the autonomous driving mode to the manual driving mode. Assume also that the vehicle 10 is controlled from the RC 100.

First, upon switching from the autonomous driving mode to the manual driving mode by a command from the operator via the RC 100, the command control unit 64 inputs a command to the microcomputer 78 for switching the mask control signal which is inputted into the NAND circuits 82a and 82b, from a HIGH signal to a LOW signal (mask control signal which enables the masking of the detection signals) (Step S1). This turns on a masked state in which the first logic circuit 66 masks detection signals from the forward obstacle sensor 58a and the rearward obstacle sensor 58b.

subsequently, the command control unit 64 checks the mask control signal, which is inputted from the microcomputer 78 also to the command control unit 64, to determine whether or not the first logic circuit 66 is in the masked state (Step S3). If it is in the masked state, the command control unit 64 inputs commands for driving the steering motor 48, the brake motor 54, the throttle motor 56, etc., to the microcomputer 78 based on instructions from the RC 100. In other words, entry of manual driving commands to the microcomputer 78 is started if the first logic circuit 66 is in the masked state (Step S5).

Subsequently, the command control unit 64 determines whether or not there is any abnormality existing in the vehicle 10 based on information regarding the speed which is inputted from the microcomputer 78, information regarding the attitude of the vehicle 10 which is inputted from the attitude sensor 70, and other information (Step S7). If there is no abnormality such as driving at a faster speed than a specified speed (overspeeding), abnormal attitude (rollover), etc., existing in the vehicle 10, the entry of manual driving commands to the microcomputer 78 is continued.

The command control unit 64 also determines whether or not there is an input of a HIGH signal (emergency stop control signal which indicates a need for an emergency stop) from any of the bumper switches 18, the emergency stop switches 60, and the switch 76a in the receiver 76 to the microcomputer 78 (Step S9). Whether or not a HIGH signal has been inputted to the microcomputer 78 can be determined from information which comes from the microcomputer 78 to the command control unit 64. If there is not an input of a HIGH signal to the microcomputer 78 from any of the above-mentioned switches, the entry of manual driving commands to the microcomputer 78 is continued.

Thereafter, if Step S11 determines that there is an input of a vehicle stop command from the RC 100, the command control unit 64 gives the microcomputer 78 a manual driving stop command (Step S13), and stops operation in the manual driving mode. On the other hand, if Step S11 does not detect an input of a vehicle stop command, the process returns to Step S7 and the entry of manual driving commands to the microcomputer 78 is continued as long as Step S15 determines that the first logic circuit 66 is in the masked state.

If Step S3 determines that the first logic circuit 66 is not in the masked state, the process waits for a predetermined time (one second, for example) (Step S17). If a masked state is not detected upon a lapse of the predetermined time, the process moves to Step S13. If Step S7 determines that there is an abnormality, the command control unit 64 switches the signal for the AND circuit 84 in the first logic circuit 66 from a HIGH signal to a LOW signal (Step S19). With this change, the switch 86 in the first logic circuit 66 inputs a HIGH signal to the microcomputer 78 and the second logic circuit 80. Thereafter, the process moves to Step S13. The process also moves to Step S13 if Step S9 determines that any of the switches is in an open state, or if Step S15 failed to detect the masked state due to an error.

Next, reference will be made to Fig. 3 and Fig. 5, to describe the operation of the drive control unit 62 in the manual driving mode.

When the microcomputer 78 receives the switching command from the command control unit 64 (see Step S1 in Fig. 4), the microcomputer 78 in the drive control unit 62 switches the mask control signal for the NAND circuits 82a, 82b, from a HIGH signal (mask control signal which disables the masking of the detection signals) to a LOW signal (mask control signal which enables the masking of the detection signals) (Step S101). This brings the first logic circuit 66 into a masked state, enabling the vehicle 10 to drive regardless of a result of detection by the forward obstacle sensor 58a or the rearward obstacle sensor 5Bb.

Subsequently, the microcomputer 78 drives the steering motor 48, the brake motor 54, the throttle motor 56, etc. based on manual driving commands from the command control unit 64, and starts manual driving (Step S103).

Thereafter, when Step S105 determines that any of the switches has inputted a HIGH signal to the microcomputer 78 and the second logic circuit 80, the microcomputer 78 identifies the switch which has outputted the HIGH signal (Step S107). With this, the second logic circuit 80 disables the ignition unit 34 and actuates the solenoid brake 38, bringing the vehicle 10 to an emergency stop (Step S109).

A result of the determination in Step S107 is inputted to the RC 100 via the command control unit 64, for example, so that the RC 100 displays which of the switches outputted the HIGH signal, i.e., the reason for the emergency stop, on the monitor screen. It should be noted here that if none of the switches has outputted a determination signal, this means that a LOW signal was inputted from the command control unit 64 to the AND circuit 84 in the first logic circuit 66, which has caused the switch 86 in the first logic circuit 66 to input a HIGH signal. In other words, this indicates that the vehicle 10 has been brought to the emergency stop due to an abnormality.

Thereafter, when a manual driving stop command is inputted from the command control unit 64, the microcomputer 78 drives the brake motor 54 to actuate each of the disc brakes (Step S111), and stops the manual driving. The process also moves to Step S111 and stops the manual driving when Step S113 finds an input of a manual driving stop command from the command control unit 64.

On the other hand, if Step S105 does not detect an input of a HIGH signal as the emergency stop control signal, and Step S113 does not detect an input of a manual driving stop command, the microcomputer 78 follows manual driving commands from the command control unit 64 and controls the motors, etc. accordingly, thereby continuing the manual driving.

It should be noted here that if the first logic circuit 66 inputs a HIGH signal as the emergency stop control signal to the microcomputer 78, the command control unit 64 inputs a manual driving stop signal to the microcomputer 78 based on information from the microcomputer 78. For this reason, the entry of the manual driving stop signal to the microcomputer 78 occurs after the entry of the HIGH signal from any of the switches to the microcomputer 78 and the second logic circuit 80, because these switches are connected directly to the microcomputer 78 and the second logic circuit 80. In this case therefore, an emergency stop is made by the ignition unit 34 and the solenoid brake 38, and thereafter a normal stopping operation by the disc brakes is performed.

It should be noted here that when a human operator is on the vehicle 10 for manual driving, the button switch 42a on the input console 42 may be pressed to switch from the autonomous driving mode to the manual driving mode. Another arrangement may be that switching to the manual driving mode is achieved automatically when the operator moves the operation unit such as the steering handle 32, the brake lever 50, the throttle lever 52, etc.

Next, description will cover the operation of the command control unit 64 in the autonomous driving mode with reference to Fig. 3 and Fig. 6.

Here, assume that the first logic circuit 66 is supplied with a LOW signal (detection signal indicating absence of an obstacle) from the forward obstacle sensor 58a and the rearward obstacle sensor 58b, and a LOW signal (mask control signal which enables the masking of the detection signals) from the microcomputer 78, and then a switching has been made from the manual driving mode to the autonomous driving mode. In other words, this simulates a situation where the vehicle was switched from the manual driving mode to the autonomous driving mode without any obstacle existing ahead of or behind the vehicle 10.

First, when the switching is made from the manual driving mode to the autonomous driving mode by an input into the RC 100 or by the button switch 42a, the command control unit 64 inputs a command to the microcomputer 78 for switching the mask control signal which is inputted into the NAND circuits 82a and B2b, from a LOW signal to a HIGH signal (mask control signal which disables the masking of the detection signals) (Step S51). This turns off the masked state of the first logic circuit 66.

Subsequently, the command control unit 64 checks the mask control signal, which is inputted from the microcomputer 78, to determine whether or not the first logic circuit 66 is no longer in the masked state (Step S53). If it is not in the masked state, the command control unit 64 inputs commands for driving the steering motor 48, the brake motor 54, the throttle motor 56, etc., to the microcomputer 78 based on position information from the positioning unit 68 and the map data from the HDD 72. In other words, entry of autonomous driving commands to the microcomputer 78 is started if the first logic circuit 66 is not in the masked state (Step S55).

Subsequently, the command control unit 64 determines whether or not there is any abnormality existing in the vehicle 10 based on information regarding the speed which is inputted from the microcomputer 78, information regarding the attitude which is inputted from the attitude sensor 70, and other information (Step S57). If there is no abnormality, the entry of autonomous driving commands to the microcomputer 78 is continued.

The command control unit 64 also determines whether or not there is an input of a HIGH signal from any of the bumper switches 18, the emergency stop switches 60, the switch 76a in the receiver 76, and the switch 86 in the first logic circuit 66 to the microcomputer 78 (Step S59). If there is not an input of a HIGH signal (emergency stop control signal which indicates a need for an emergency stop) to the microcomputer 78, the entry of autonomous driving commands to the microcomputer 78 is continued.

Thereafter, when Step S61 determines that the vehicle 10 has arrived at an end of a predetermined driving path, the command control unit 64 inputs an autonomous driving stop command to the microcomputer 78 (Step S63) to stop operation in the autonomous driving mode. On the other hand, if Step S61 does not detect that the end of the path has been reached, the process returns to Step S57 and entry of autonomous driving commands to the microcomputer 78 is continued as long as Step S65 determines that the first logic circuit 66 is not in the masked state.

If Step S53 determines that the first logic circuit 66 is in the masked state, the process waits for a predetermined time (one second, for example) (Step S67). If a masked state is still detected upon a lapse of the predetermined time, the process moves to Step S63. If Step S57 determines that there is an abnormality, the command control unit 64 switches the signal for the AND circuit 84 in the first logic circuit 66 from a HIGH signal to a LOW signal (Step S69). With this change, the switch 86 in the first logic circuit 66 inputs a HIGH signal to the microcomputer 78 and the second logic circuit 80. Thereafter, the process moves to Step S63. The process also moves to Step S63 if Step S59 determines that any of the switches is in an open state to cause an input of a HIGH signal to the microcomputer 78, or if Step S65 determines, due to an error, that there is a masked state.

Next, description will cover the operation of the drive control unit 62 in the autonomous driving mode, with reference to Fig. 3 and Fig. 7.

When the microcomputer 78 receives a switching command sent from the command control unit 64 (see Step S51 in Fig. 6), the microcomputer 78 switches the mask control signal for the NAND circuits 82a and 82b, from a LOW signal (mask control signal which enables the masking of the detection signals) to a HIGH signal (mask control signal which disables the masking of the detection signals) (Step S151). This turns off the masked state of the first logic circuit 66. Under this state, detection of an obstacle by at least one of the forward obstacle sensor 58a and the rearward obstacle sensor 58b will enable the vehicle 10 to be brought to an emergency stop.

Subsequently, the microcomputer 78 drives the steering motor 48, the brake motor 54, the throttle motor 56, etc., based on autonomous driving commands from the command control unit 64, and starts autonomous driving (Step S153).

Thereafter, when Step S155 determines that any of the switches has inputted a HIGH signal to the microcomputer 78 and the second logic circuit 80, the microcomputer 78 identifies the switch which has outputted the HIGH signal (Step S157). With this, the second logic circuit 80 disables the ignition unit 34 and actuates the solenoid brake 38 bringing the vehicle 10 to an emergency stop (Step S159). A result of the determination in Step S157 is used for displaying the cause of the emergency stop on the monitor screen of the RC 100 and on the display console 40.

Thereafter, when an autonomous driving stop command is inputted from the command control unit 64, the microcomputer 78 drives the brake motor 54 to actuate each of the disc brakes (Step S161) and stops the autonomous driving. The process also moves to Step S161 and stops the autonomous driving when Step S163 determines that there is an input of an autonomous driving stop command from the command control unit 64.

on the other hand, if Step S155 does not determine that there is an input of a HIGH signal as the emergency stop control signal, and Step S163 does not determine that there is an input of a manual driving stop command, the microcomputer 78 follows autonomous driving commands from the command control unit 64 and controls the motors, etc. accordingly, thereby continuing the autonomous driving.

It should be noted here that if the first logic circuit 66 inputs a HIGH signal as the emergency stop control signal to the microcomputer 78, the command control unit 64 inputs an autonomous driving stop signal to the microcomputer 78 based on information from the microcomputer 78. For this reason, the entry of the autonomous driving stop signal to the microcomputer 78 occurs after the entry of the HIGH signal from any of the switches to the microcomputer 78 and the second logic circuit 80, because these switches are connected directly to the microcomputer 78 and the second logic circuit 80. In this case therefore, an emergency stop is made, and thereafter a normal stopping operation is performed.

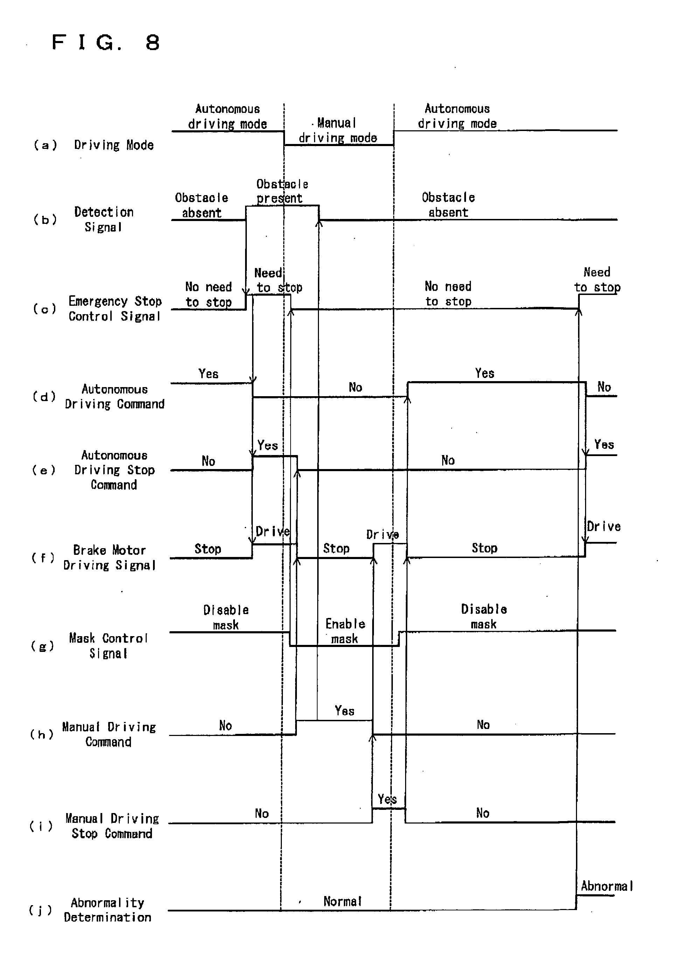

Next, description will cover an example of changes in the driving mode, various signals, and various commands of the vehicle 10, with reference to Fig. 8.

It should be noted here that in whichever case where the detection signal of forward obstacle sensor 58a has changed from one to the other of a HIGH signal and a LOW signal, and a case where the detection signal of rearward obstacle sensor 58b has changed from one to the other of a HIGH signal and a LOW signal, the other signals and commands change accordingly. In the present example, the detection signal from the forward obstacle sensor 58a changes from one state to the other, whereas the detection signal from the rearward obstacle sensor 58b is constant (LOW signal).

When a HIGH signal (detection signal indicating the presence of an obstacle) is inputted from the forward obstacle sensor 58a to the first logic circuit 66 {see Fig. 8(b)} in the autonomous driving mode {see Fig. 8(a)}, a HIGH signal (emergency stop control signal which indicates a need for an emergency stop) is inputted from the first logic circuit 66 to the microcomputer 78 and the second logic circuit 80 {see Fig. 8(c)}. This brings the vehicle 10 to an emergency stop.

After a lapse of time since the output of the HIGH signal from the first logic circuit 66, entry of autonomous driving commands to the microcomputer 78 is stopped, and entry of an autonomous driving stop command is started {see Fig. 8(d) and Fig. 8(e)}. Meanwhile, the microcomputer 7B starts outputting a signal for driving the brake motor 54 {see Fig. 8(f)} commencing braking by the disc brakes.

Now, refer to Fig. 8(b) through Fig. 8(d). While the switching of the emergency stop control signal is almost simultaneous with the start of the obstacle detection, stopping of the entry of the autonomous driving command and the starting of the entry of the autonomous driving stop command are delayed from the start of obstacle detection because stopping output of the autonomous driving command and starting output of the autonomous driving stop command are performed only after the command control unit 64 has confirmed, based on the information supplied by the microcomputer 78, that a HIGH signal is outputted from the forward obstacle sensor 58a.

Subsequently, when switching is made from the autonomous driving mode to the manual driving mode {see Fig. 8(a)}, a LOW signal (mask control signal which enables the masking of the detection signals) is inputted from the microcomputer 78 to the first logic circuit 66 {see Fig. 8(g)} bringing the first logic circuit 66 into the masked state. Thus, the first logic circuit 66 starts entry of a LOW signal (emergency stop control signal which indicates no need for an emergency stop) to the second logic circuit 80 {see Fig. 8(c)} enabling the vehicle 10 to drive. Then, entry of manual driving commands to the microcomputer 78 is started while entry of the autonomous driving stop command is stopped {see Fig. 8(e) and Fig. 8(h)}. Meanwhile, the microcomputer 78 starts outputting a signal for stopping the brake motor 54 {see Fig. 8(f)} which stops the braking operation by the disc brakes. Thus, the vehicle 10 is enabled for manual driving. Thereafter, the vehicle 10 is manually driven to avoid the obstacle so that there is no longer an input of a HIGH signal (detection signal indicating presence of an obstacle) to the first logic circuit 66 {see Fig. 8(b)}.

Subsequently, entry of a manual driving stop command to the microcomputer 78 is started while entry of the manual driving commands is stopped {see Fig. 8(h) and Fig. 8(i)}. Meanwhile, the microcomputer 78 starts outputting a signal for driving the brake motor 54 {see Fig. 8(f)} thereby starting brake application by the disc brakes, and thus the vehicle 10 is brought to a stop.

Thereafter, when switching is made from the manual driving mode to the autonomous driving mode {see Fig. 8(a)}, entry of a HIGH signal (a mask control signal which disables the masking of the detection signals) to the first logic circuit 66 is started {see Fig. 8(g)}, and the first logic circuit 66 is brought out of the masked state. Then, entry of a manual driving stop command to the microcomputer 78 is stopped whereas entry of autonomous driving commands is started {see Fig. 8(d) and Fig. 8(i)}. Meanwhile, the microcomputer 78 starts outputting a signal for stopping the brake motor 54 {see Fig. 8(f)} thereby stopping brake application by the disc brakes. Thus, the vehicle 10 is enabled for autonomous driving again.

subsequently, if the command control unit 64 determines that there is an abnormality such as excessive speeding or an abnormal attitude in the vehicle 10 {see Fig. 8(j)}, the command control unit 64 inputs a LOW signal to the AND circuit 84 in the first logic circuit 66. This causes the first logic circuit 66 to input a HIGH signal to the microcomputer 78 and the second logic circuit 80 {see Fig. 8(c)}, and the vehicle 10 is brought to an emergency stop. Then, after a lapse of time, entry of autonomous driving commands to the microcomputer 78 is stopped whereas entry of an autonomous driving stop command is started {see Fig. 8(d) and Fig. 8(e)}. Meanwhile, the microcomputer 78 starts outputting a signal for driving the brake motor 54 {see Fig. 8(f)} thereby starting brake application by the disc brakes.

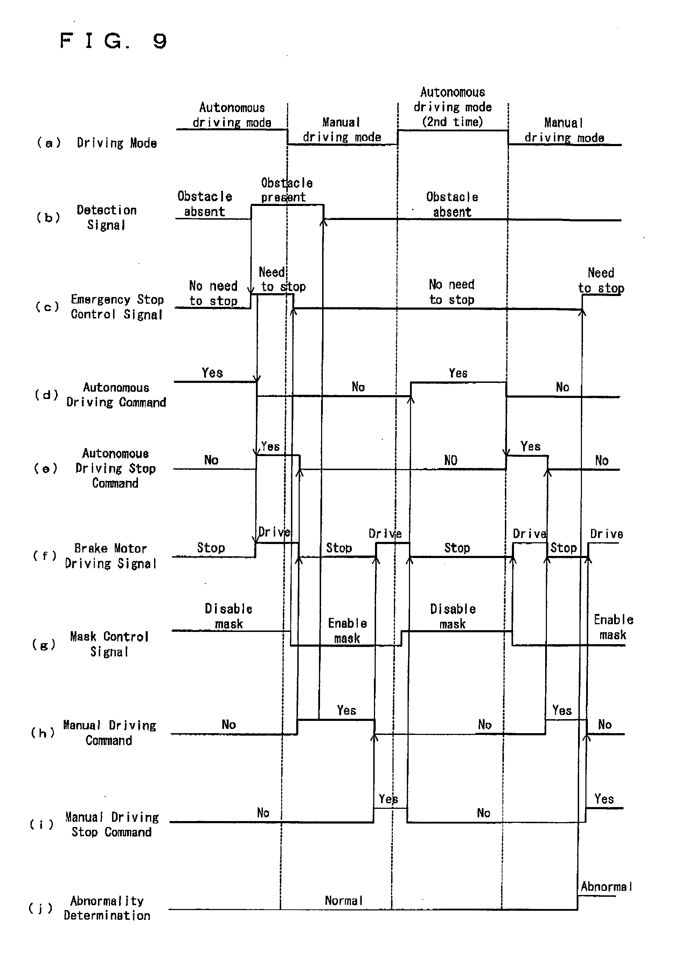

Next, description will cover another example of changes in the driving mode, various signals, and various commands of the vehicle 10 with reference to Fig. 9. Fig. 9 shows a case where a human operator switches the mode of driving during the second-time autonomous driving mode, to the manual driving mode, and an abnormality is found in the vehicle 10 under this manual driving mode. Other events in Fig. 9 are the same as Fig. 8, so no repetitive description will be made.

First, upon switching from the second-time autonomous driving mode (resumed autonomous driving mode) to the manual driving mode {see Fig. 9(a)} following the command from the operator, entry of autonomous driving commands to the microcomputer 78 is stopped whereas entry of an autonomous driving stop command is started {see Fig. 9(d) and Fig. 9(e)}. Then, after a lapse of time, entry of a LOW signal (mask control signal which enables the masking of the detection signals) from the microcomputer 78 to the first logic circuit 66 is started whereas entry of a driving signal to the brake motor 54 is started {see Fig. 9(f) and Fig. 9(g)}. Then, entry of manual driving commands to the microcomputer 78 is started whereas entry of an autonomous driving stop signal is stopped {see Fig. 9(e) and Fig. 9(h)}. Meanwhile, the microcomputer 78 starts outputting a signal for stopping the brake motor 54 {see Fig. 9(f)} thereby stopping brake application by the disc brakes. Thus, the vehicle 10 is enabled for manual driving.

Subsequently, if the command control unit 64 determines that there is an abnormality such as excessive speeding in the vehicle 10 {see Fig. 9(j)}, the command control unit 64 inputs a LOW signal to the AND circuit 84 in the first logic circuit 66. This causes the first logic circuit 66 to input a HIGH signal to the microcomputer 78 and the second logic circuit 80 {see Fig. 9(c)}, and thus, the vehicle 10 is brought to an emergency stop. Then, after a lapse of time, entry of a manual driving stop command to the microcomputer 78 is started whereas entry of a manual driving command is stopped {see Fig. 9(h) and Fig. 9(i)}. Meanwhile, the microcomputer 78 starts outputting a signal for driving the brake motor 54 {see Fig. 9(f)} thereby starting brake application by the disc brakes.

According to the vehicle 10 as described above, setting the driving mode to an autonomous driving mode causes the microcomputer 78 to input a HIGH signal (mask control signal which disables the masking of the detection signals) to the first logic circuit 66. This then causes the first logic circuit 66 to generate an emergency stop control signal using detection signals from the forward obstacle sensor 58a and the rearward obstacle sensor 58b, without masking the detection signals. As has been described, by utilizing hardware, i.e., the first logic circuit 66, and by generating the emergency stop control signal virtually directly from the detection signal, it becomes possible to generate an emergency stop control signal which corresponds more truly to the detection signal. In other words, the first logic circuit 66 is more reliable in outputting a HIGH signal (emergency stop control signal which indicates a need for an emergency stop) when the inputted detection signal is a HIGH signal (detection signal indicating a presence of an obstacle), and in outputting a LOW signal (emergency stop control signal which indicates no need for an emergency stop) otherwise. Therefore, it is now possible to stop the vehicle 10 more reliably upon detection of an obstacle during autonomous driving, and therefore to improve reliability. Further, when the driving mode is set to the manual driving mode, the microcomputer 78 inputs a LOW signal (mask control signal which enables the masking of the detection signals) to the first logic circuit 66. Then, the first logic circuit 66 outputs a LOW signal regardless of the detection signals from the forward obstacle sensor 58a and the rearward obstacle sensor 58b. Therefore, it is now possible under the manual driving mode to drive the vehicle 10 regardless of a result of the detection by the forward obstacle sensor 58a and the rearward obstacle sensor 58b, and this makes it possible to improve convenience.

The mask control signal is also inputted to the command control unit 64 from the microcomputer 78, and the command control unit 64 determines whether or not the microcomputer 78 actually truly outputs a mask control signal. This means that it is now possible to monitor the microcomputer 78 by using the command control unit 64, and therefore to further improve reliability.

Further, in an autonomous driving mode, the command control unit 64 provides the microcomputer 78 a command to start autonomous driving when there is an output of a HIGH signal (mask control signal which disables the masking of the detection signals) from the microcomputer 78 to the first logic circuit 66. In such an arrangement, the first logic circuit 66 provides the second logic circuit 80 a HIGH signal as the emergency stop control signal if there is an obstacle in the driving path. Therefore, autonomous driving is not started and contact with the obstacle is.prevented.

It should be noted here that in the above preferred embodiments, description was made for a case where a LOW signal is inputted from the command control unit 64 to the AND circuit 84 in the first logic circuit 66 if there is an abnormality in the vehicle 10 whereas a HIGH signal is inputted if there is no abnormality in the vehicle 10. However, the present invention is not limited to this. Such a signal which indicates presence or absence of an abnormality in the vehicle 10 may not be given from the command control unit 64 to the AND circuit 84 in the first logic circuit 66. In this case, the AND circuit 84 is supplied with two signals from the NAND circuits 82a and 82b.

In the above preferred embodiments, description was made for a case where a control signal is generated based on an emergency stop control signal and this control signal is outputted from the second logic circuit 80 to control operation of the ignition unit 34 and the solenoid brake 38, and therefore emergency stopping operation of the vehicle 10. However, the present invention is not limited to this. The emergency stop control signal may be inputted directly from the first logic circuit 66 to the drive/controller which includes the ignition unit 34 and the solenoid brake 38 to control the operation of the driving/braking device. In other words, emergency stopping operation of the vehicle 10 may be controlled by direct input of the emergency stop control signal from the first logic circuit 66 to the driving/braking device.

Further, in the above preferred embodiments, description was made for a case where a mask control signal is inputted from the microcomputer 78 to the first logic circuit 66. However, the mask control signal may be inputted from the command control unit 64 to the first logic circuit 66.

It should be noted here that in the above preferred embodiments, description was made for a case where the vehicle 10 preferably is a four-wheeled buggy, for example. However, the present invention is not limited to this. The present invention is applicable to any kind of vehicle, such as two-wheel vehicles or three-wheel vehicles.

The field of application of the vehicle according to the preferred embodiments of the present invention is not limited to farming or surveying. The present invention is also applicable to autonomous driving golf cars for golf courses and autonomous driving patrol vehicles for indoor/outdoor use, for example.

Further, the detector arranged to detect an obstacle may be provided by a sensor which detects an obstacle from an image taken by a camera.

While preferred embodiments of the present invention have been described above, it is to be understood that variations and modifications will be apparent to those skilled in the art without departing the scope and spirit of the present invention. The scope of the present invention, therefore, is to be determined solely by the following claims.

## Claims

1. A vehicle capable of autonomous driving under self-control and manual driving under a human operator's control, comprising:
an operation unit arranged to set an autonomous or manual driving mode;
a first controller arranged to output a mask control signal which corresponds to the driving mode set by the operation unit;
a detector arranged to detect an obstacle and output a detection signal; and
a logic circuit arranged to generate an emergency stop control signal which indicates a need or no need for an emergency stop of the vehicle based on the mask control signal from the first controller and the detection signal from the detector; wherein
the mask control signal enables or disables masking of the detection signal; and
an emergency stop operation of the vehicle is controlled based on the emergency stop control signal from the logic circuit.

2. The vehicle according to Claim 1, further comprising:
a second controller arranged to input a command to the first controller to output the mask control signal which corresponds to the driving mode; wherein
the mask control signal from the first controller is also inputted to the second controller; and
the second controller determines whether or not the mask control signal corresponds to the driving mode.

3. The vehicle according to claim 2, wherein the second controller provides the first controller with an autonomous driving start command under the autonomous driving mode if there is an input of the mask control signal to disable masking of the detection signal from the first controller.
